# EUROPÄISCHE PATENTSCHRIFT

(11) **EP 3 918 172 B1**
(45) Veröffentlichungstag und Bekanntmachung des Hinweises auf die Patenterteilung: **11.01.2023**
(21) Anmeldenummer: 20701052.1
(22) Anmeldetag: 21.01.2020
(51) Int. Cl.: E06B 3/66

(54) **ISOLIERVERGLASUNGSEINHEIT UND VERGLASUNG**
INSULATING GLAZING UNIT AND GLAZING
UNITÉ DE VITRAGE ISOLANT ET VITRAGE

(30) Priorität: 29.01.2019 EP 19154159
(43) Veröffentlichungstag der Anmeldung: 08.12.2021
(73) Patentinhaber: Saint-Gobain Glass France, 92400 Courbevoie (FR)
(72) Erfinder: DRÖGE, Alicia, 52134 Herzogenrath (DE); HOLTSTIEGE, Thomas, 58332 Schwelm (DE); MARJAN, Christopher, 52072 Aachen (DE); EFFERTZ, Christian, 52080 Aachen (DE)
(74) Vertreter: Obermair, Christian Egbert
(86) Internationale Anmeldenummer: PCT/EP2020/051339
(87) Internationale Veröffentlichungsnummer: WO 2020/156870

(56) Entgegenhaltungen:
- WO-A1-2007/137719

## Beschreibung

Die Erfindung betrifft eine Isolierverglasungseinheit, die mindestens zwei Glasscheiben und ein zwischen diesen nahe deren Kanten umlaufendes Abstandshalter- und Dichtprofil aufweist, wobei an der Isolierverglasungseinheit mindestens ein RFID-Transponder als Identifikationselement angebracht ist. Des Weiteren betrifft die Erfindung eine Verglasung mit einem metallischen Rahmen und einer in den Rahmen eingesetzten Isolierverglasungseinheit, wobei der Rahmen die Kanten der Isolierverglasungseinheit umgreift und zugleich den oder die RFID-Transponder überdeckt. Die Verglasung ist insbesondere zur Bildung einer Fassadenverglasung, eines Fensters, einer Tür oder einer Innenraumabtrennung mit entsprechendem Aufbau vorgesehen.

Moderne Fenster, Türen und Fassadenverglasungen, zumindest für den Einsatz in nördlichen und gemäßigten Breiten, werden üblicherweise unter Einsatz vorgefertigter Isolierverglasungseinheiten (IGU) hergestellt, die den oben erwähnten Aufbau haben, gegebenenfalls aber auch mehr als zwei Glasschreiben im Verbund umfassen können. Derartige Isolierverglasungseinheiten stellen massenhaft hergestellte, versandte und auch eigenständig gehandelte Produkte dar, die auf ihrem Weg bis in ein Endprodukt und gegebenenfalls auch noch bei dessen Wartung und Instandhaltung eindeutig identifizierbar sein sollten.

Es ist bereits bekannt, Isolierverglasungseinheiten mit identifizierenden Kennzeichnungen zu versehen, und in der entsprechenden Praxis haben sich gewisse Anforderungen der Hersteller und Anwender ergeben:
- Die identifizierende Markierung sollte sowohl von der Innen- als auch der Außenseite des fertigen Fensters, der Tür oder der Fassade her unsichtbar sein.
- Die Kennzeichnung sollte aus einem Abstand von mindestens 30 cm "lesbar" sein.
- Die Kennzeichnung sollte weitestgehend fälschungssicher sein, also nicht ohne Weiteres überschrieben oder kopiert werden können.

Die Wirksamkeit herkömmlicher identifizierender Markierungen, wie etwa Barcodes und QR-Codes, basiert auf deren Sichtbarkeit, was für Isolierverglasungseinheiten zumindest eine Einschränkung unter obigem erstem Aspekt bedeutet. Auch die Erfüllung der zweiten Anforderung gestaltet sich damit schwierig. Der Schutz vor dem Kopieren kann nicht gewährleistet werden, da Barcodes und QR-Codes abfotografiert werden können.

Es wurde auch vorgeschlagen, Isolierverglasungseinheiten mit "elektronischen" Kennzeichen, insbesondere über Funk auslesbaren Identifikatoren, sogenannten RFID-Transpondern, zu versehen. Derartige Isolierverglasungseinheiten sind beispielsweise offenbart in der WO 00/36261 A1 oder der WO 2007/137719 A1. Des Weiteren sind aus der EP 2 230 626 A1 RFID-Transponder zur Kennzeichnung von Massiv- und Verbundvollmaterialplatten bekannt.

Ein solcher RFID Transponder kann mit einem Passwort geschützt werden, so dass er nicht ohne erheblichen Aufwand überschrieben oder seine Funkfähigkeit zerstört werden kann.

Bestimmte Typen von Fenster- und Türrahmen, insbesondere aber Fassadenkonstruktionen, in denen Isolierverglasungseinheiten verbaut werden, bestehen vollständig oder mindestens teilweise aus einem Metall (Aluminium, Stahl...), welches den Durchgang von Funkwellen vom oder zum RFID-Transponder an der Isolierverglasungseinheit unterbricht oder zumindest stark dämpft. Aus diesem Grund hat sich insbesondere die Erfüllung der obigen zweiten Anforderung als schwierig erwiesen. Bekannte mit RFID-Transpondern versehene Isolierverglasungseinheiten sind daher nicht ohne Weiteres bei metallischen Rahmenkonstruktionen einzusetzen. Das verringert den potentiellen Einsatzbereich der so gekennzeichneten Verglasungseinheiten und somit die Akzeptanz der entsprechenden Markierungslösungen bei den Herstellern und Anwendern.

Der Erfindung liegt daher die Aufgabe zugrunde, eine verbesserte Isolierverglasungseinheit für Verglasungen mit Rahmenkonstruktionen bereitzustellen, die zumindest zu einem erheblichen Teil aus einem Metall bestehen, und die auch bei solchen Einbausituationen die Erfüllung der o. g. Anforderungen gewährleistet.

Diese Aufgabe wird gemäß einem ersten Aspekt der Erfindung durch eine Isolierverglasungseinheit mit den Merkmalen des Anspruchs 1 gelöst. Gemäß dem weiteren Aspekt der Erfindung wird sie durch eine Verglasung mit einer erfindungsgemäßen Isolierverglasungseinheit gelöst. Zweckmäßige Fortbildungen des Erfindungsgedankens sind Gegenstand der jeweiligen abhängigen Ansprüche.

Die Erfindung umfasst eine Isolierverglasungseinheit, umfassend:
- mindestens einen Abstandshalter, der umlaufend zu einem Abstandshalterrahmen geformt ist und einen Innenbereich umgrenzt,
- eine erste Glasscheibe, die auf einer Scheibenkontaktfläche des Abstandshalterrahmens und eine zweite Glasscheibe, die auf einer zweiten Scheibenkontaktfläche des Abstandshalterrahmens angeordnet ist, und
- die Glasscheiben über den Abstandshalterrahmen hinausragen und einen Außenbereich bilden, der zumindest abschnittsweise, bevorzugt vollständig, mit einem Versiegelungselement gefüllt ist,
wobei
- mindestens ein RFID-Transponder im Außenbereich oder im äußeren Kantenbereich der Glasscheiben angeordnet ist, und
- ein streifenförmiges Kopplungselement mit dem RFID-Transponder elektromagnetisch gekoppelt ist.

Vorteilhafterweise weist der RFID-Transponder eine Dipol-Antenne auf und das Kopplungselement ist mit einem Antennenpol der Dipol-Antenne des RFID-Transponders elektromagnetisch gekoppelt.

Elektromagnetisch gekoppelt bedeutet hier, dass das Kopplungselement und der RFID-Transponder durch ein elektromagnetisches Feld gekoppelt sind, d.h. sowohl kapazitiv als auch induktiv verbunden sind und bevorzugt nicht galvanisch.

Erfindungsgemäß ist mindestens ein RFID-Transponder im Außenbereich (zwischen den Glasscheiben und um den Abstandshalterrahmen herum) oder im äußeren Kantenbereich der Glasscheiben angeordnet.

Im Rahmen der vorliegenden Erfindung wird der äußere Kantenbereich der Glasscheiben durch die Stirnseiten der Glasscheiben sowie durch einen Stirnseiten-nahen Bereich der Außenflächen der Glasscheiben gebildet.

Der Begriff Außenfläche der Glasscheibe bezeichnet im Rahmen der vorliegenden Erfindung die jeweilige dem Abstandshalterrahmen abgewandte Oberfläche der Glasscheibe und der Begriff Innenfläche der Glasscheibe bezeichnet die dem Abstandshalterrahmen zugewandte Oberfläche der Glasscheibe.

Ein weiterer Aspekt der Erfindung umfasst eine Verglasung, insbesondere eine Fassadenverglasung, ein Fenster, eine Tür oder eine Innenraumtrennung, umfassend:
- einen Rahmen aus einem metallischen ersten Rahmenelement, einem metallischen zweiten Rahmenelement und einem die Rahmenelemente zumindest abschnittsweise und bevorzugt vollständig umlaufend, verbindenden polymeren dritten Rahmenelement und
- einer im Rahmen angeordneten erfindungsgemäßen Isolierverglasungseinheit,
wobei das Kopplungselement in mindestens einem Kopplungsbereich mit einem der metallischen Rahmenelemente und bevorzugt in zwei Kopplungsbereichen mit jeweils einem der metallischen Rahmenelemente galvanisch oder kapazitiv gekoppelt ist.

Der Rahmen umgreift dabei, bevorzugt U-förmig, die Stirnseite der Isolierverglasungseinheit und überdeckt zugleich den oder die RFID-Transponder in Durchsichtsrichtung durch die Glasscheiben. Üblicherweise sind dabei die Schenkel des ersten und zweiten Rahmenelements derart ausgebildet, dass sie den Außenbereich und den Abstandshalterrahmen in Durchsichtsrichtung durch die Isolierverglasungseinheit zumindest vollständig verdecken.

Die Erfindung schließt den Gedanken ein, den grundsätzlich ungünstigen Abstrahlungs- und Einstrahlungsbedingungen für Funkwellen in einem metallischen Rahmen einer Verglasung durch eine spezielle Aus- bzw. Einkopplung des RFID-Signals Rechnung zu tragen. Sie schließt weiterhin den Gedanken ein, ein Kopplungselement, welches separat vom RFID-Transponder bereitgestellt wird, so an der Isolierverglasungseinheit anzuordnen, dass es bei geeignetem Einbau in einer Verglasung optimal an deren Rahmen ankoppelt und eine Signalübertragung vom Rahmen zur Antenne des RFID-Transponders bzw. von der Antenne des RFID-Transponders zum Rahmen und damit nach außerhalb der Verglasung bewirkt.

Die Erfindung ist im Ergebnis von umfangreichen experimentellen Untersuchungen entstanden, die an Isolierverglasungseinheiten und Verglasungen mit dem oben erwähnten grundsätzlichen Aufbau unternommen wurden.

Vorteilhafte Abstandshalter bestehen aus einem mit einem Trocknungsmittel gefülltem Hohlprofil, das aus Metall besteht oder wenigstens abschnittsweise mit einer Metallfolie oder metallisierten Folie beschichtet ist, und bei dem auf der scheibenäußeren Oberfläche des Abstandhalters (im Folgenden Außenfläche des Abstandshalters) ein (ebenfalls umlaufende) Versiegelungselement aufgebracht ist.

Was die Anwendungssituation anbelangt, haben die Erfinder insbesondere Untersuchungen an in metallische Rahmen eingebetteten Isolierverglasungseinheiten angestellt, bei denen der Rahmen aus zwei metallenen und damit elektrisch leitenden Rahmenelementen bestehen, die über ein polymeres und elektrisch isolierendes Rahmenelement verbunden sind. Derartige Rahmen aus zwei metallischen Rahmenelementen, die durch ein polymeres Rahmenelement verbunden sind, sind besonders vorteilhaft, da durch das polymere Rahmenelement ein Wärmeübertrag von dem ersten Rahmenelement zum zweiten Rahmenelement und damit beispielsweise von einer Außenraumseite zu einer Innenraumseite deutlich reduziert wird.

Zwischen den Außenseiten der Glasscheiben und den Innenseiten der benachbarten metallischen Rahmenelemente sind dabei Elastomerprofile angeordnet, die die Verglasung abdichten und die Glasscheiben fixieren.

Bei den Untersuchungen wurden handelsübliche UHF-RFID-Transponder eingesetzt, deren Aufbau und Funktionsweise hinlänglich bekannt ist und daher hier nicht weiter beschrieben werden muss.

In einer vorteilhaften Ausgestaltung einer erfindungsgemäßen Isolierverglasungseinheit ist der RFID-Transponder als Dipol-Antenne ausgebildet. Derartige Bauformen lassen sich besonders gut in den länglichen und streifenförmigen Außenbereich entlang des Abstandshalters und zwischen den Glasscheiben, an den Stirnflächen der Glasscheiben oder an den Außenflächen der Glasscheiben innerhalb des Rahmens anordnen.

Die Dipol-Antenne enthält zumindest einen ersten Antennenpol und einen zweiten Antennenpol oder besteht daraus. Bevorzugt sind die Antennenpole in einer Linie hintereinander fortlaufend und damit parallel zueinander angeordnet. In der Mitte zwischen den Antennenpolen ist in der Regel eine RFID-Elektronik oder eine Verbindung zu einer RFID-Elektronik angeordnet.

Das erfindungsgemäße Kopplungselement ist abschnittsweise deckungsgleich über dem RFID-Transponder angeordnet. Dabei bedeutet abschnittsweise deckungsgleich, dass das Kopplungselement in der orthogonalen Projektion auf den RFID-Transponder die Dipol-Antenne abschnittsweise überdeckt.

Ist der RFID-Transponder beispielsweise innerhalb des Außenbereichs, der durch das Hinausragen der Glasscheiben über den Abstandshalterrahmen gebildet ist, angeordnet, so überdeckt das Kopplungselement in Blickrichtung senkrecht auf die Stirnfläche der Isolierverglasung abschnittsweise den RFID-Transponder und insbesondere einen Antennenpol der Dipol-Antenne des RFID-Transponders. Es versteht sich, dass für eine optimale kapazitive Kopplung des Kopplungselements an den RFID-Transponder und eine erfindungsgemäße Weiterleitung des RFID-Funksignals, das Kopplungselement mindestens ähnlich groß wie die Dipol-Antenne des RFID-Transponders ist. Insbesondere ragt das Kopplungselement in der Projektion sowohl an einer Seite entlang der Erstreckungsrichtung der Dipol-Antenne als auch quer zur Erstreckungsrichtung über die Dipol-Antenne hinaus. Die Erstreckungsrichtung der Dipol-Antenne ist dabei die Längsrichtung der Dipol-Antenne, also entlang ihrer linear zueinander angeordneten Antennenpole und in Richtung deren gerader Verlängerung.

Die bei solchen RFID-Transpondersystemen genutzten Funkwellenlängen liegen üblicherweise je nach Typ im Bereich der der UHF bei 865-869 MHz (u.a. europäische Frequenzen) bzw. 902-928 MHz (US-amerikanische und andere Frequenzbänder) oder der SHF bei 2,45 GHz und 5,8 GHz. Die freigegebenen Frequenzen für UHF-RFID-Transponder unterscheiden sich regional für Asien, Europa und Amerika und sind von der ITU koordiniert.

Funksignale mit diesen Frequenzen durchdringen sowohl Holz als auch herkömmliche Kunststoffe, nicht aber Metalle. Insbesondere bei der unmittelbaren Anordnung der Dipol-Antenne auf einem metallischen Abstandshalter oder auf einer metallischen Folie oder auf einer metallisierten Folie auf dem Abstandshalter kann dies zu einem Kurzschluss der Dipol-Antenne und damit zu einer unerwünschten Beeinträchtigung des RFID-Transponders führen.

Daher ist in einer bevorzugten Ausgestaltung des RFID-Transponders die Dipol-Antenne auf einem dielektrischen Trägerelement, besonders bevorzugt einem polymeren Trägerelement angeordnet. Die Dicke des Trägerelements ist dabei an das Material und insbesondere an die Dielektrizitätskonstante des Trägerelements und an die Geometrie des Dipols angepasst.

Es versteht sich, dass die Dipol-Antennen samt Elektronik per se auf einer dielektrischen und beispielsweise polymeren Trägerschicht angeordnet sein können, was die Montage und Vorfabrikation deutlich vereinfacht.

Die Erkenntnisse der Erfinder gelten grundsätzlich sowohl für passive als auch für aktive RFID-Transponder.

Im Hinblick auf den Metallrahmen, der die Isolierverglasungseinheit umgreift, und der aufgrund elementarer physikalischer Gesetzmäßigkeiten und gemäß der darauf basierenden Kenntnis des Fachmanns die HF-Strahlung von randnah angebrachten RFID-Transpondern oder deren Antennen empfindlich stören, wenn nicht völlig unterbinden sollten, ist die vorgeschlagene Lösung überraschend. Sie erbringt den unvorhergesehenen Vorteil, dass ein erfindungsgemäß platzierter RFID-Transponder in einem relativ großen Abstand von ca. 2 m von der Verglasung, in die die erfindungsgemäße Isolierverglasungseinheit eingebaut ist, noch problemlos und zuverlässig auslesbar ist.

Es versteht sich, dass der Fachmann durch einfache Versuche Ausführungen und Positionen mit vorteilhaften Abstrahl- und Empfangseigenschaften finden kann. Die nachfolgend genannten Ausführungsbeispiele und -aspekte stellen daher primär Empfehlungen für den Fachmann dar, ohne die Ausführungsmöglichkeiten der Erfindung zu beschränken.

So versteht es sich, dass eine Isolierverglasungseinheit mehrere RFID-Transponder, insbesondere in den Kanten- oder Außenbereichen der verschiedenen Seiten (oben, unten, rechts, links) der Isolierverglasung aufweisen kann. Dies ist in der Regel bei Isolierverglasungen nach dem Stand der Technik mit nur geringen Reichweiten der RFID-Transponder notwendig, um ein RFID-Signal schnell aufzufinden und die Isolierverglasungseinheit schnell zu identifizieren. Durch die erfindungsgemäße Erhöhung der Reichweite der RFID-Transponder genügen in der Regel genau ein oder wenige RFID-Transponder pro Isolierverglasung.

In einer vorteilhaften Ausgestaltung der erfindungsgemäßen Isolierverglasungseinheit enthält das Kopplungselement eine freitragende Metallfolie, bevorzugt aus Aluminium, einer Aluminiumlegierung, Kupfer, Silber oder Edelstahl oder besteht daraus. Bevorzugte Metallfolien weisen eine Dicke von 0,02 mm bis 0,5 mm und insbesondere von 0,09 mm bis 0,3 mm auf. Derartige Kopplungselemente lassen sich leicht in die Isolierverglasungseinheit integrieren und sind überdies einfach und kostengünstig herstellbar. Es versteht sich, dass die Metallfolie auch durch eine Polymerfolie stabilisiert oder ein- oder beidseitig elektrisch isoliert sein kann.

In einer alternativen vorteilhaften Ausgestaltung der erfindungsgemäßen Isolierverglasungseinheit enthält das Kopplungselement eine metallisierte Polymerfolie mit einer bevorzugten Metallisierung aus Aluminium, einer Aluminiumlegierung, Kupfer, Silber oder Edelstahl oder besteht daraus. Bevorzugte Metallschichten weisen eine Dicke von 10 µm bis 200 µm auf. Derartige Kopplungselemente lassen sich ebenfalls leicht in die Isolierverglasungseinheit integrieren und sind überdies einfach und kostengünstig herstellbar.

Das erfindungsgemäße Kopplungselement ist zumindest abschnittsweise an der Stirnfläche der Isolierverglasungseinheit angeordnet. Es kann dabei bevorzugt auf einem Abschnitt einer Stirnseite einer der Glasscheiben und an der Außenseite des Außenbereichs angeordnet sein. Alternativ kann das Kopplungselement auch abschnittsweise innerhalb des Außenbereichs angeordnet sein und insbesondere in das Versiegelungselement hineinreichen.

Alternativ kann sich das Kopplungselement auch auf den beiden Stirnflächen der Glasscheiben und auf der dazwischenliegenden Außenseite des Außenbereichs bzw. innerhalb des Außenbereichs angeordnet sein.

Das Kopplungselement überragt dabei mindestens eine der Glasscheiben, bevorzugt beide Glasscheiben, quer zur Erstreckungsrichtung der Glasscheibe. Die Erstreckungsrichtung der Glasscheibe bedeutet hier die Richtung der langen Seite der Glasscheibe im Gegensatz zur kurzen Seite der Glasscheibe, die lediglich durch die Materialdicke der Glasscheibe gebildet wird.

In einer vorteilhaften Ausgestaltung einer erfindungsgemäßen Isolierverglasungseinheit überragt das Kopplungselement die erste Glasscheibe und/oder die zweite Glasscheibe um einen Überstand U, der an den Abstand der Glasscheibe zu metallischen Rahmenelement abhängt. Der Abstand der Glasscheibe zum metallischen Rahmenelement hängt dabei insbesondere von der Dicke des Elastomerprofils ab, die beispielsweise 6 mm bis 7 mm beträgt.

Der Überstand U beträgt bevorzugt von 2 mm bis 30 mm, besonders bevorzugt von 5 mm bis 15 mm und insbesondere von 7 mm bis 10 mm.

In einer weiteren vorteilhaften Ausgestaltung einer erfindungsgemäßen Isolierverglasungseinheit ist der RFID-Transponder, bevorzugt unmittelbar, an der Außenseite des Abstandshalters angeordnet und insbesondere daran angeklebt. In einer alternativen vorteilhaften Ausgestaltung einer erfindungsgemäßen Isolierverglasungseinheit ist der RFID-Transponder, bevorzugt unmittelbar, an einer der Glasscheiben angeordnet und insbesondere daran angeklebt. Es versteht sich, dass der RFID-Transponder auch innerhalb des Materials des Versieglungselements angeordnet sein kann, beispielsweise durch Einlegen in das noch flüssige Versiegelungselement und anschließendes Aushärten oder Verfestigen.

In einer weiteren vorteilhaften Ausgestaltung einer erfindungsgemäßen Isolierverglasungseinheit beträgt der Abstand A zwischen der Dipol-Antenne des RFID-Transponders und dem Kopplungselement von 0 mm bis 10 mm, bevorzugt von 0 mm bis 4 mm, besonders bevorzugt von 1 mm bis 4 mm.

Die bevorzugte Länge L des Kopplungselements, also die Länge parallel zur Erstreckungsrichtung der Dipol-Antenne, hängt von der Betriebsfrequenz des RFID-Transponders ab.

In einer weiteren vorteilhaften Ausgestaltung einer erfindungsgemäßen Isolierverglasungseinheit weist das Kopplungselement eine Länge L parallel zur Dipol-Antenne von größer oder gleich 40% der halben Wellenlänge Lambda/2 der Betriebsfrequenz der Dipol-Antenne auf, bevorzugt von 40% bis 240%, besonders bevorzugt von 60% bis 120 % und insbesondere von 70% bis 95%.

Für RFID-Transponder im UHF-Bereich, insbesondere für RFID-Transponder bei 865-869 MHz (u.a. europäische Frequenzen) bzw. 902-928 MHz (US-amerikanische und andere Frequenzbänder), konnten besonders gute Ergebnisse für Kopplungselemente mit einer Länge L von mehr als 7 cm, bevorzugt von mehr als 10 cm und insbesondere von mehr als 14 cm erzielt werde. Die maximale Länge war dabei weniger kritisch. So führten maximale Längen von 30 cm noch zu guten Ergebnissen und guten Lesereichweiten.

In einer alternativen vorteilhaften Ausgestaltung einer erfindungsgemäßen Isolierverglasungseinheit weist das Kopplungselement eine Länge L parallel zur Dipol-Antenne von 7 cm bis 40 cm, bevorzugt von 10 cm bis 20 cm und insbesondere von 12 cm bis 16 cm auf.

In einer vorteilhaften Ausgestaltung einer erfindungsgemäßen Isolierverglasungseinheit überdeckt das Kopplungselement lediglich einen Antennenpol der Dipol-Antenne und ragt auf der dem anderen Antennenpol abgewandten Seite über den Antennenpol hinaus. Überdecken bedeutet hier, dass das Kopplungselement in Blickrichtung auf den RFID-Transponder vor dem jeweiligen Antennenpol angeordnet ist und diesen verdeckt. Oder mit anderen Worten, das Kopplungselement überdeckt in der orthogonalen Projektion den jeweiligen Antennenpol.

Beispielsweise überdeckt das Kopplungselement lediglich den ersten Antennenpol der Dipol-Antenne und erstreckt sich auf der dem zweiten Antennenpol abgewandten Seite über den ersten Antennenpol hinaus. Alternativ überdeckt das Kopplungselement lediglich den zweiten Antennenpol der Dipol-Antenne und erstreckt sich auf der dem ersten Antennenpol abgewandten Seite über den zweiten Antennenpol hinaus.

Vorteilhafterweise ist dabei eine Kante des Kopplungselements über der Mitte der Dipol-Antenne angeordnet und erstreckt über den ersten oder den zweiten Antennenpol. Wie Untersuchungen der Erfinder ergaben, kann das Kopplungselement auch einen geringen Versatz V zwischen der Kante des Kopplungselements und der Mitte der Dipol-Antenne aufweisen, wobei der Versatz V in der Projektion des Kopplungselements auf die Dipol-Antenne gemessen wird. Der Versatz V bedeutet also, dass die Projektion der Kante des Kopplungselements nicht exakt in der Mitte zwischen den Antennenpolen der Dipol-Antenne angeordnet ist, sondern um einen Versatz V davon in Erstreckungsrichtung des einen Antennenpols oder in Erstreckungsrichtung des anderen Antennenpols abweicht.

Der jeweilige maximale Versatz ist dabei von der halben Wellenlänge Lambda/2 der Betriebsfrequenz der Dipol-Antenne abhängig.

Optimal ist ein Versatz von V = 0. Dennoch konnten für Abweichungen davon noch gute Ergebnisse und Lesereichweiten erzielt werden. Vorteilhafterweise beträgt der Versatz V von -20% bis +20% der halben Wellenlänge Lambda/2 der Betriebsfrequenz des RFID-Transponders, bevorzugt von -10% mm bis +10% und insbesondere von -5% bis +5%.

In einer weiteren vorteilhaften Ausgestaltung der Erfindung beträgt der Versatz V bei einer Betriebsfrequenz des RFID-Transponders im UHF-Bereich von -30 mm bis +30 mm, bevorzugt von -20 mm bis +20 mm und insbesondere von -10 mm bis +10 mm. Ein positives Vorzeichen bedeutet hier beispielsweise, dass die Kante des Kopplungselements in der Projektion auf dem zweiten Antennenpol angeordnet ist und der Rest des zweiten Antennenpols vollständig bedeckt ist, der erste Antennenpol hingegen vollkommen unbedeckt ist. Umgekehrt bedeutet ein negatives Vorzeichen, dass die Kante des Kopplungselements in der Projektion auf dem ersten Antennenpol angeordnet ist und ein Abschnitt des ersten Antennenpols sowie der Rest des zweiten Antennenpols vollständig bedeckt ist.

Die Breite des Kopplungselements hängt von der Breite der Stirnseite der Isolierverglasungseinheit und dem jeweiligen einseitigen oder beidseitigen Überstand über die Glasscheiben ab. Typische Breiten sind von 2 cm bis 10 cm und bevorzugt von 3 cm bis 5 cm.

Die konkrete Dimensionierung wird der Fachmann in Anbetracht der Abmessungen der Isolierverglasungseinheit einerseits und des Umfassungsrahmens andererseits, insbesondere unter Beachtung der Weite des Rahmens vornehmen.

Das erfindungsgemäße Kopplungselement ist in mindestens einem Kopplungsbereich mit einem der metallischen Rahmenelemente und bevorzugt in zwei Kopplungsbereichen mit jeweils einem der metallischen Rahmenelemente galvanisch oder kapazitiv gekoppelt. Das Kopplungselement ist dabei bevorzugt in unmittelbarem Kontakt zum metallischen Rahmenelement und ist mit diesem beispielsweise galvanisch verbunden. Bevorzugt berührt das Kopplungselement das metallische Rahmenelement über seine gesamte Länge.

Das Kopplungselement muss dabei nicht fest am metallischen Rahmenelement verankert sein. Es genügt vielmehr auch ein loses Anliegen oder Anklemmen. Insbesondere genügt eine kapazitive Kopplung zwischen Kopplungselement und metallischen Rahmenelement im Kopplungsbereich.

Für die Platzierung des RFID-Transponders in der Isolierverglasungseinheit gibt es verschiedene Möglichkeiten, aus denen der Fachmann unter Beachtung der speziellen Montagetechnologie der IGU und auch im Hinblick auf die konkrete Fassaden- oder Fensterkonstruktion eine geeignete auswählen kann. In bestimmten Ausführungen ist der RFID-Transponder, dem ein Kopplungselement zugeordnet ist, auf der äußeren Oberfläche des Abstandshalterprofils platziert. In einer alternativen Ausführung ist der RFID-Transponder, dem ein Kopplungselement zugeordnet ist, auf einer im Außenbereich liegenden Oberfläche einer der Glasscheiben an oder nahe deren Begrenzungskante platziert.

In einer vorteilhaften Ausgestaltung einer erfindungsgemäßem Isolierverglasungseinheit ist der RFID-Transponder im Außenbereich, gebildet durch das Herausragen der Glasscheiben über den Abstandshalterrahmen, angeordnet. Der RFID-Transponder ist besonders bevorzugt unmittelbar an der Außenfläche des Abstandshalters oder an der Innenfläche einer der Glasscheiben angeordnet. Alternativ kann der RFID-Transponder inmitten des Außenbereichs angeordnet sein, d.h. ohne unmittelbarem Kontakt zu der Außenfläche des Abstandshalters und ohne unmittelbarem Kontakt zu den Innenflächen der Glasscheiben.

In einer weiteren vorteilhaften Ausgestaltung einer erfindungsgemäßem Isolierverglasungseinheit ist der RFID-Transponder an einer Außenfläche einer der Glasscheiben mit einem Abstand von maximal 10 mm, bevorzugt maximal 50 mm und besonders bevorzugt von maximal 3 mm zur benachbarten Stirnfläche der jeweiligen Glasscheibe angeordnet. Alternativ ist ein RFID-Transponder an einer Stirnfläche einer der Glasscheiben angeordnet.

Es versteht sich, dass mehrere RFID-Transponder auch an verschiedenen der oben genannten Positionen angeordnet sein können.

In einer vorteilhaften Ausgestaltung einer erfindungsgemäßem Isolierverglasungseinheit ist das streifenförmiges Kopplungselement
∘ innerhalb des Versiegelungselements im Außenbereich,
∘ an einer Außenseite des Außenbereichs,
∘ an mindestens einer Stirnseite der Glasscheiben und/oder
∘ einer Außenseite der Glasscheiben
angeordnet.

Vorteile und Zweckmäßigkeiten der Erfindung ergeben sich im Übrigen aus der nachfolgenden Beschreibung von Ausführungsbeispielen und -aspekten der Erfindung anhand der Figuren. Die Zeichnungen sind rein schematische Darstellungen und nicht maßstabsgetreu. Sie schränken die Erfindung in keiner Weise ein. Es zeigen:
- Figur 1A: eine Detailansicht (Querschnittsdarstellung) eines Kantenbereiches einer Isolierverglasungseinheit gemäß einer Ausführungsform der Erfindung,
- Figur 1 B: eine Draufsicht auf eine Isolierverglasungseinheit gemäß der Ausführungsform der Erfindung nach Figur 1A,
- Figur 1C: eine Detailansicht (Querschnittsdarstellung) eines Kantenbereiches einer Isolierverglasungseinheit gemäß einer weiteren Ausführungsform der Erfindung,
- Figur 1D: eine Detailansicht (Querschnittsdarstellung) eines Kantenbereiches einer Isolierverglasungseinheit gemäß einer weiteren Ausführungsform der Erfindung,
- Figur 1E: eine Detailansicht (Querschnittsdarstellung) eines Kantenbereiches einer Isolierverglasungseinheit gemäß einer weiteren Ausführungsform der Erfindung,
- Figur 1 F: eine Detailansicht (Querschnittsdarstellung) eines Kantenbereiches einer Isolierverglasungseinheit gemäß einer weiteren Ausführungsform der Erfindung,
- Figur 1G: eine Detailansicht (Querschnittsdarstellung) eines Kantenbereiches einer Isolierverglasungseinheit gemäß einer weiteren Ausführungsform der Erfindung,
- Figur 2A: eine Detailansicht (Querschnittsdarstellung) eines Kantenbereiches einer Verglasung mit Isolierverglasungseinheit gemäß einer Ausführungsform der Erfindung,
- Figur 2B: eine Detailansicht (Draufsicht) auf einen Ausschnitt der Verglasung mit Isolierverglasungseinheit nach Figur 2A,
- Figur 2C: eine Detailansicht (Querschnittsdarstellung) der Verglasung in einer Schnittebene parallel zur Stirnfläche der Isolierverglasungseinheit nach Figur 2A,
- Figur 3A: eine Detailansicht (Querschnittsdarstellung) eines Kantenbereiches einer Verglasung mit Isolierverglasungseinheit gemäß einer weiteren Ausführungsform der Erfindung,
- Figur 3B: eine Detailansicht (Querschnittsdarstellung) der Verglasung in einer Schnittebene parallel zur Stirnfläche der Isolierverglasungseinheit nach Figur 3A, und
- Figur 4: eine Detailansicht (Querschnittsdarstellung) einer Verglasung in einer Schnittebene parallel zur Stirnfläche der Isolierverglasungseinheit gemäß einer weiteren Ausführungsform.

In den Figuren sowie der nachfolgenden Beschreibung sind die Isolierverglasungseinheiten wie auch die Verglasungen sowie die einzelnen Komponenten jeweils, unabhängig davon, dass sich die konkreten Ausführungen unterscheiden, mit den gleichen oder ähnlichen Bezugsziffern bezeichnet.

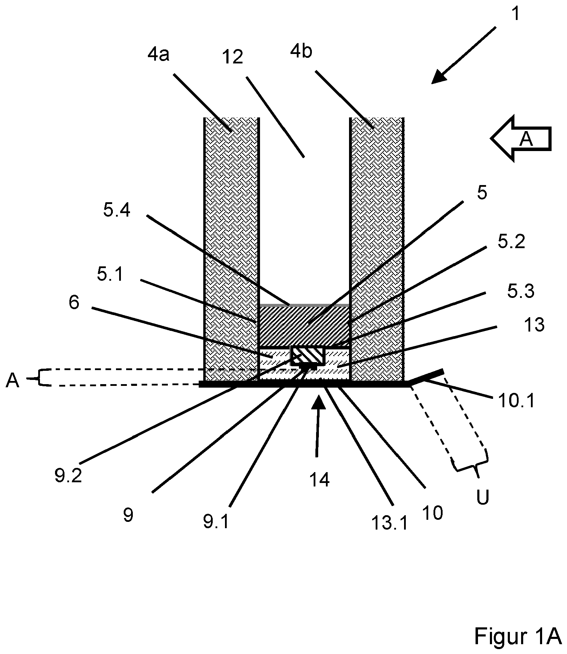

Figur 1A zeigt einen Kantenbereich einer Isolierverglasungseinheit 1 im Querschnitt. Die Isolierverglasungseinheit 1 umfasst bei dieser Ausführung zwei Glasscheiben 4a und 4b. Diese werden durch ein nahe der Stirnfläche 14 der Isolierverglasungseinheit 1 zwischen die Glasscheiben 4a, 4b gesetzten Abstandshalter 5 in einem vorbestimmten Abstand gehalten. Der Grundkörper des Abstandshalters 5 besteht beispielsweise aus glasfaserverstärktem Styrol-Acrylnitril (SAN).

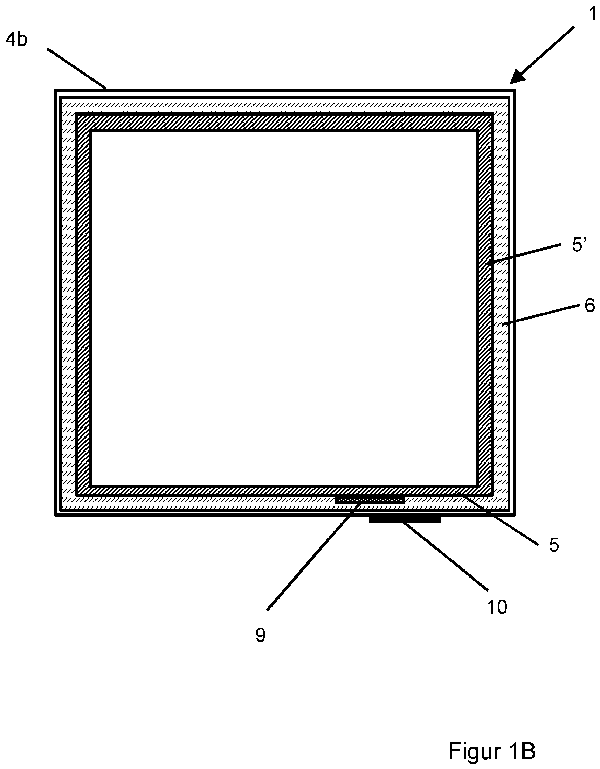

Figur 1B zeigt eine schematische Draufsicht auf die Isolierverglasungseinheit 1 in einer Blickrichtung, die durch den Pfeil A gekennzeichnet ist. Figur 1B zeigt daher die zweiten Glasscheibe 4b obenliegend.

Mehrere Abstandshalter 5 (hier beispielsweise vier) sind entlang der Seitenkanten der Glasscheiben 4a, 4b geführt und formen einen Abstandshalterrahmen 5'. Die Scheibenkontaktflächen 5.1, 5.2 der Abstandhalter 5, d.h. die Kontaktflächen der Abstandshalter 5 zu den Glasscheiben 4a, 4b, sind jeweils mit den Glasscheiben 4a bzw. 4b verklebt und dadurch mechanisch fixiert und abgedichtet. Die Klebeverbindung besteht beispielsweise aus Polyisobutylen oder Butylkautschuk. Die Innenfläche 5.4 des Abstandshalterrahmen 5' umgrenzt zusammen mit den Glasscheiben 4a, 4b einen Innenbereich 12.

Der Abstandshalter 5 ist üblicherweise hohl (nicht gezeigt) und mit einem (nicht gezeigten) Trocknungsmittel befüllt, welches über innenseitige kleine Öffnungen (ebenfalls nicht gezeigt) etwaige in den Innenbereich 12 eingedrungene Feuchtigkeit an sich bindet. Das Trockenmittel enthält beispielsweise Molekularsiebe wie natürliche und/oder synthetische Zeolithe. Der Innenbereich 12 zwischen den Glasscheiben 4a und 4b ist beispielsweise mit einem Edelgas, etwa Argon, gefüllt.

Die Glasscheiben 4a, 4b ragen in der Regel allseitig über den Abstandshalterrahmen 5' hinaus, so dass die Außenfläche 5.3 des Abstandshalters 5 und die außenliegenden Abschnitte der Glasscheiben 4a, 4b einen Außenbereich 13 bilden. Im diesem Außenbereich 13 der Isolierverglasungseinheit 1 zwischen den Glasschreiben 4a und 4b und außerhalb des Abstandshalters 5 ist ein Versiegelungselement (Dichtprofil) 6 eingebracht. Dieses ist hier vereinfacht einteilig dargestellt. In der Praxis umfasst es üblicherweise zwei Komponenten, von denen eine die Kontaktfläche zwischen Abstandshalter 5 und Glasscheiben 4a, 4b abdichtet und vor eindringender Feuchtigkeit und Fremdeinflüssen von außen schützt. Die zweite Komponente des Versiegelungselements 6 dichtet zusätzlich und stabilisiert die Isolierverglasungseinheit 1 mechanisch. Das Versiegelungselement 6 wird beispielsweise von einem organischen Polysulfid gebildet.

Auf der Außenfläche 5.3 des Abstandshalters 5, also auf der dem Außenbereich 13 zugewandten Seite des Abstandshalters 5, ist beispielsweise eine (hier nicht dargestellte) Isolationsfolie aufgebracht, die den Wärmeübergang durch den polymeren Abstandshalter 5 in den Innenbereich 12 vermindert. Die Isolationsfolie kann beispielsweise mit einem Polyurethan-Schmelzklebstoff auf dem polymeren Abstandshalter 5 befestigt werden. Die Isolationsfolie enthält beispielsweise drei polymere Schichten aus Polyethylenterephthalat mit einer Dicke von 12 µm und drei metallische Schichten aus Aluminium mit einer Dicke von 50 nm. Die metallischen Schichten und die polymeren Schichten sind dabei jeweils alternierend angebracht, wobei die beiden äußeren Lagen von polymeren Schichten gebildet werden. Das heißt, die Schichtfolge besteht aus einer polymere Schicht, gefolgt von einer metallischen Schicht, gefolgt von einer Klebeschicht, gefolgt von einer polymeren Schicht, gefolgt von einer metallischen Schicht, gefolgt von einer Klebeschicht, gefolgt von einer metallischen Schicht, gefolgt von einer polymeren Schicht.

Wie bereits erwähnt, besteht der Grundkörper des Abstandshalters 5 beispielsweise aus glasfaserverstärktem Styrol-Acrylnitril (SAN). Durch die Wahl des Glasfaseranteils im Abstandshaltergrundkörper kann dessen Wärmeausdehnungskoeffizient variiert und angepasst werden. Durch Anpassung des Wärmeausdehnungskoeffizienten des Abstandshaltergrundkörpers und der Isolationsfolie lassen sich temperaturbedingte Spannungen zwischen den unterschiedlichen Materialien und ein Abplatzen der Isolationsfolie vermeiden. Der Abstandshaltergrundkörper weist beispielsweise einen Glasfaseranteil von 35 % auf. Der Glasfaseranteil im Abstandshaltergrundkörper verbessert gleichzeitig die Festigkeit und Stabilität.

Die erste Glasscheibe 4a und die zweite Glasscheibe 4b bestehen beispielsweise aus Kalk-Natron-Glas mit einer Dicke von 3 mm und weisen beispielsweise Ausmaße von 1000 mm × 1200 mm auf. Es versteht sich, dass jede in dieser und den folgenden Ausgestaltungsbeispielen gezeigte Isolierverglasungseinheit 1 auch drei oder mehr Glasscheiben aufweisen kann.

Die Isolierverglasungseinheit 1 nach den Figuren 1A und 1B ist beispielhaft mit einem RFID-Transpondern 9 versehen, der innerhalb der Versiegelung 6 und hier beispielsweise unmittelbar an der Außenfläche 5.4 des Abstandshalters 5 angeordnet ist. Es versteht sich, dass der RFID-Transponder 9 auch an den Glasscheiben 4a oder 4b innerhalb des Außenbereichs 13 angeordnet sein kann.

Der RFID-Transponder 9 ist beispielsweise auf den Abstandshalter 5 aufgeklebt oder durch die Versiegelung 6 fixiert.

Die Betriebsfrequenz des RFID-Transponders liegt im UHF-Bereich und beispielsweise bei 866,6 MHz.

Im dargestellten Beispiel handelt es sich um einen RFID-Transponder 9, bei dem die Dipol-Antenne 9.1 auf einem dielektrischen Trägerkörper 9.2 angeordnet ist. Dies ist notwendig, da der Abstandshalter 5, wie oben erwähnt, eine metallisierte und damit elektrisch leitende (Wärme-)Isolationsfolie aufweist. Ohne dielektrischen Trägerkörper 9.2 wäre die Dipol-Antenne 9.1 unmittelbar auf der elektrisch leitenden Isolationsfolie angeordnet und dadurch "kurzgeschlossen". Durch die Verwendung eines RFID-Transponders 9 mit dielektrischem Trägerkörper 9.2 (sogenannter "on-metal"-RFID-Transponder) kann der Kurzschluss vermieden werden.

Es versteht sich, dass bei Abstandshaltern 5 aus einem Dielektrikum ohne Isolationsfolie oder mit rein dielektrischen Isolationsfolien (z.B. ohne Metallisierung), die Dipol-Antenne 9.1 des RFID-Transponders 9 keinen dielektrischen Trägerkörper 9.2 aufweisen muss.

Des Weiteren ist an der Stirnseite 14 der Isolierverglasungseinheit 1 ein Kopplungselement 10 angeordnet, das beispielsweise aus einer 0,1 mm dicken Kupferfolie besteht. Das Kopplungselement 10 erstreckt sich hier beispielsweise von der Stirnseite 14 der ersten Glasscheibe 4a über das Versiegelungselement 6 und über die Stirnseite der zweiten Glasscheibe 4b hinweg und weist einen einseitigen Überstand 10.1 über die zweite Glasscheibe 4b auf. Der Überstand U beträgt beispielsweise 9 mm.

Eine Kante des Kopplungselements 10 ist dabei in etwa deckungsgleich über einem der beiden Antennenpole der Dipol-Antenne 9.1 angeordnet. Das heißt die Kante des Kopplungselements 10 ist im Wesentlichen in der Mitte der Dipol-Antenne 9.1 angeordnet. Deckungsleich angeordnet bedeutet hier, dass das Kopplungselement 10 innerhalb der orthogonalen Projektion des Antennenpols der Dipol-Antenne 9.1 bezüglich der Stirnfläche 14 der Isolierverglasungseinheit 1, in deren Außenbereich 13 der RFID-Transponder 9, angeordnet ist und diese zumindest vollständig abdeckt. Mit anderen Worten, das Kopplungselement 10 ist bezüglich einer Draufsicht auf die Stirnseite 14 der Isolierverglasungseinheit 1 vor dem RFID-Transponder 9 angeordnet und verdeckt einen Antennenpol der Dipol-Antenne 9.1 vollständig.

Die Länge L des Kopplungselements 10 in seiner Erstreckungsrichtung parallel zur Erstreckungsrichtung der Dipol-Antenne 9.1 und damit parallel zur Erstreckungsrichtung der langen Seite der Glasscheiben 4a, 4b, beträgt beispielsweise 15 cm. Damit ist das Kopplungselement 10 in etwa so lang, wie die Dipol-Antenne 9.1 und ragt somit an einer Seite um etwa 50 % über deren Ende hinaus.

Durch den geringen Abstand A von beispielsweise 2 mm zwischen der Dipol-Antenne 9.1 des RFID-Transponders 9 und dem Kopplungselement 10 und der dazwischenliegenden elektrischen Isolation durch das Versiegelungselement 6 erfolgt eine erfindungsgemäße elektromagnetische Kopplung zwischen der Dipol-Antenne 9.1 und dem Kopplungselement 10.

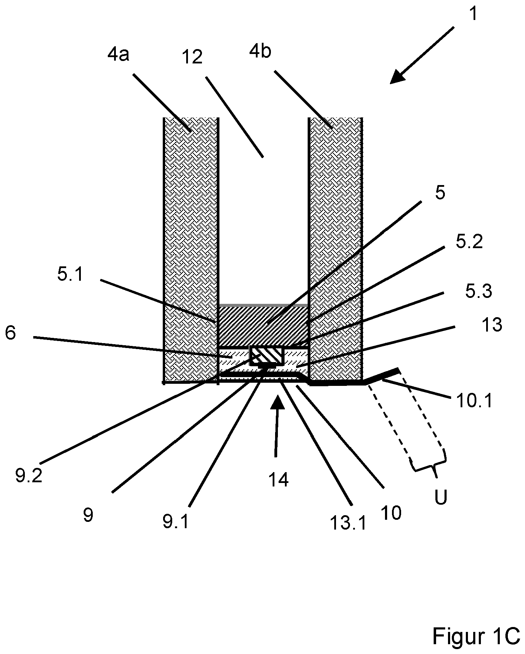

Figur 1C zeigt eine Detailansicht (Querschnittsdarstellung) eines Kantenbereiches einer Isolierverglasungseinheit 1 gemäß einer weiteren Ausführungsform der Erfindung. Die Isolierverglasungseinheit 1 aus Figur 1C unterscheidet sich von der Isolierverglasungseinheit 1 aus Figur 1A lediglich dadurch, dass das Kopplungselement 10 abschnittsweise innerhalb des Außenbereichs 13 und innerhalb der Dichtmasse 6 angeordnet ist.

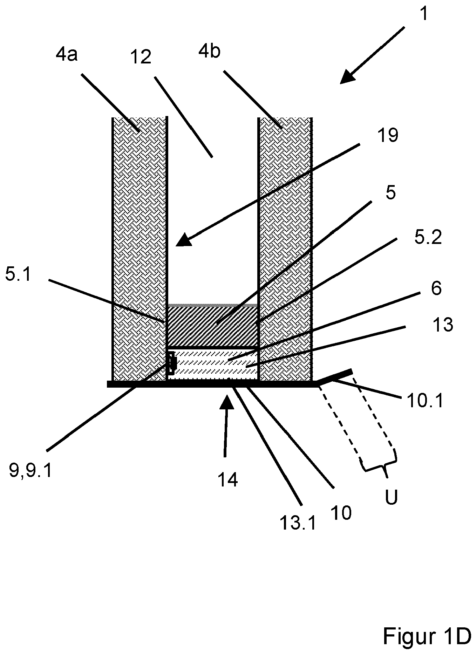

Figur 1D zeigt eine Detailansicht (Querschnittsdarstellung) eines Kantenbereiches einer Isolierverglasungseinheit 1 gemäß einer weiteren Ausführungsform der Erfindung. Die Isolierverglasungseinheit 1 aus Figur 1D unterscheidet sich von der Isolierverglasungseinheit 1 aus Figur 1A lediglich durch die Position des RFID-Transponders 9, der hier an einer im Außenbereich 13 liegenden Innenfläche 19 der ersten Glasscheibe 4a angeordnet ist. Da der RFID-Transponder 9 hier auf einer Glasscheibe, also einer elektrisch isolierenden Unterlage, angeordnet ist, muss er nicht notwendigerweise ein dielektrisches Trägerelement 9.2 aufweisen. Der RFID-Transponder 9 kann direkt oder nur durch eine dünne Trägerfolie und/oder einen Klebefilm getrennt auf der Glasscheibe 4a angeordnet werden. Es versteht sich, dass der RFID-Transponder 9 auch in diesem Ausführungsbeispiel ein dielektrisches Trägerelement 9.2 aufweisen kann, ohne dass es die Funktionsweise beeinflusst.

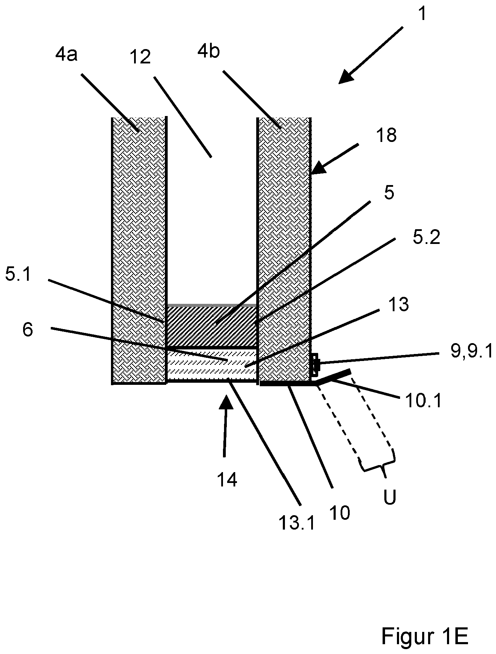

Figur 1E zeigt eine Detailansicht (Querschnittsdarstellung) eines Kantenbereiches einer Isolierverglasungseinheit 1 gemäß einer weiteren Ausführungsform der Erfindung. Die Isolierverglasungseinheit 1 aus Figur 1E unterscheidet sich von der Isolierverglasungseinheit 1 aus Figur 1A lediglich durch die Position des RFID-Transponders 9, der hier an der Außenfläche 18 der zweiten Glasscheibe 4b angeordnet ist. Da der RFID-Transponder 9 hier auf einer Glasscheibe, also einer elektrisch isolierenden Unterlage, angeordnet ist, muss er nicht notwendigerweise ein dielektrisches Trägerelement 9.2 aufweisen. Der RFID-Transponder 9 kann direkt oder nur durch eine dünne Trägerfolie und/oder einen Klebefilm getrennt auf der Glasscheibe 4b angeordnet werden. Es versteht sich, dass der RFID-Transponder 9 auch in diesem Ausführungsbeispiel ein dielektrisches Trägerelement 9.2 aufweisen kann, ohne dass es die Funktionsweise beeinflusst.

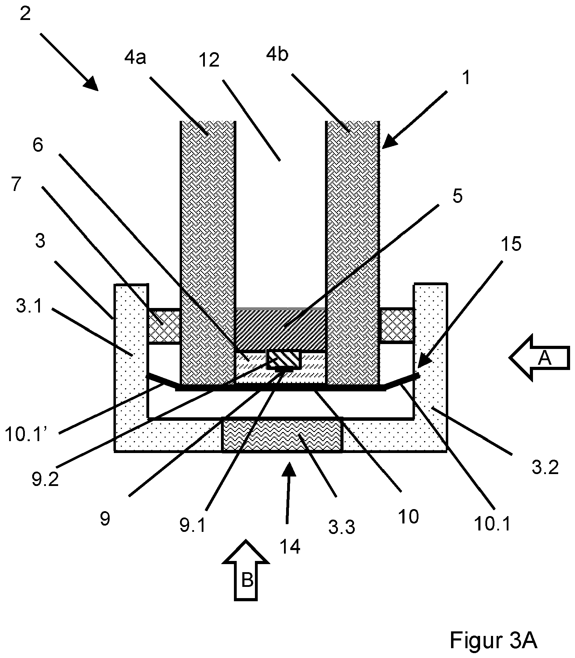

Die Dipol-Antenne 9.1 des RFID-Transponders 9 ist in diesem Beispiel erfindungsgemäß zu dem Kopplungselement 10 angeordnet und dadurch in dessen Überstandbereich 10.1 mit dem Kopplungselement 10 elektromagnetisch gekoppelt. Es versteht sich, dass bei diesem Ausgestaltungsbeispiel, sich das Kopplungselement 10 nicht über die volle Stirnfläche 14 der Isolierverglasungseinheit 1 erstrecken muss. Es genügt beispielsweise, wenn es sich über die Stirnfläche 14 der zweiten Glasscheibe 4b erstreckt und daran befestigt ist. Es versteht sich weiterhin, dass das Kopplungselement 10 sich auch über die volle Stirnfläche 14 der Isolierverglasungseinheit 1 und darüber hinaus mit einem weiteren Überstand 10.1' erstrecken kann (analog zur folgenden Figur 3A).

Der Abstand der Dipol-Antenne 9.1 des RFID-Transponders 9 zur Unterkante der zweiten Glasscheibe 4b, also zur Kante, an der die Stirnfläche 14 und die Außenfläche 18 der zweiten Glasscheibe 4b aneinandergrenzen, beträgt beispielsweise 3 mm.

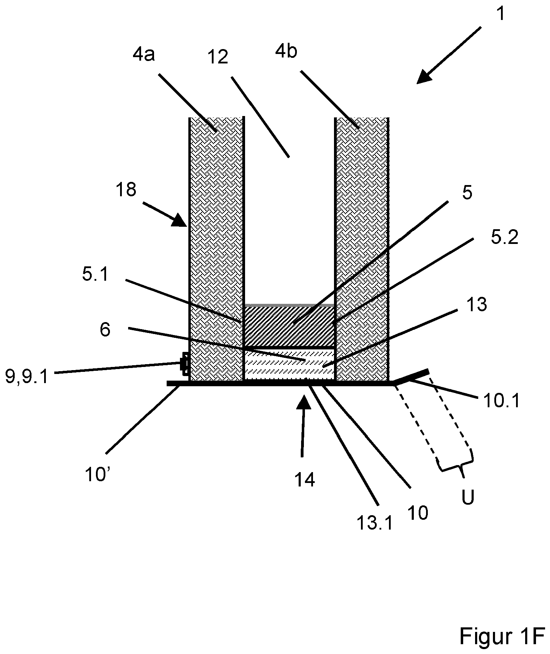

Figur 1F zeigt eine Detailansicht (Querschnittsdarstellung) eines Kantenbereiches einer Isolierverglasungseinheit 1 gemäß einer weiteren Ausführungsform der Erfindung. Die Isolierverglasungseinheit 1 aus Figur 1F unterscheidet sich von der Isolierverglasungseinheit 1 aus Figur 1E lediglich durch die Position des RFID-Transponders 9, der hier an der Außenfläche 18 der ersten Glasscheibe 4a angeordnet ist. Des Weiteren ragt das Kopplungselement 10 in einem Bereich 10' auf der dem Überstand 10.1 abgewandten Seite der Isolierverglasungseinheit1 und somit über die Stirnfläche 14 der ersten Glasscheibe 4a hinaus, um dort an die Dipol-Antenne 9.1 des RFID-Transponders anzukoppeln.

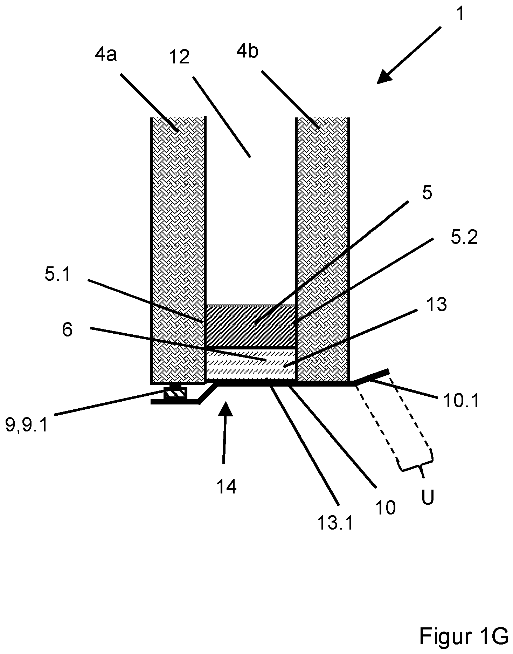

Figur 1G zeigt eine Detailansicht (Querschnittsdarstellung) eines Kantenbereiches einer Isolierverglasungseinheit 1 gemäß einer weiteren Ausführungsform der Erfindung. Die Isolierverglasungseinheit 1 aus Figur 1A unterscheidet sich von der Isolierverglasungseinheit 1 aus Figur 1A lediglich durch die Position des RFID-Transponders 9, der hier an der Stirnfläche 14 der ersten Glasscheibe 4a angeordnet ist. Da der RFID-Transponder 9 hier auf einer Glasscheibe, also einer elektrisch isolierenden Unterlage, angeordnet ist, muss er nicht notwendigerweise ein dielektrisches Trägerelement 9.2 aufweisen. Der RFID-Transponder 9 kann direkt oder nur durch eine dünne Trägerfolie und/oder einen Klebefilm getrennt auf der Glasscheibe 4a angeordnet werden.

Zur galvanischen Isolation ist zwischen Dipol-Antenne 9.1 und Kopplungselement 10 beispielsweise eine dünne Kunststofffolie angeordnet. Es versteht sich, dass die galvanische Isolation auch durch mehrere Kunststofffolien die an der Dipol-Antenne 9.1 und/oder dem Kopplungselement 10 angeordnet und mit diesem beispielsweise fest verbunden sind.

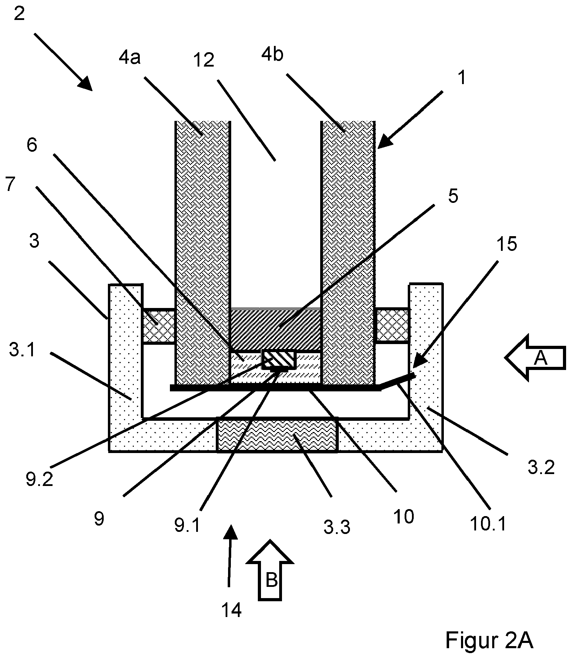

Figur 2A zeigt eine Detailansicht (Querschnittsdarstellung) eines Kantenbereiches einer Verglasung 2 mit einer Isolierverglasungseinheit 1 gemäß den Figuren 1A und 1B.

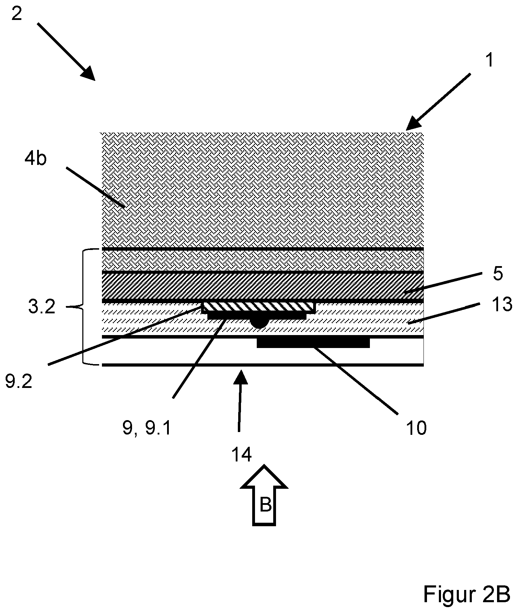

Figur 2B zeigt eine Detailansicht (Draufsicht) auf einen Ausschnitt der Verglasung 2 mit Isolierverglasungseinheit 1 nach Figur 2A mit Blickrichtung gemäß dem Pfeil A aus Figur 2A.

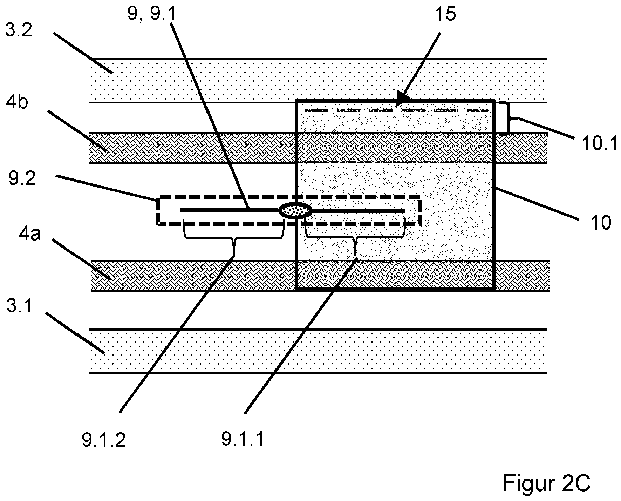

Figur 2C zeigt eine Detailansicht (Querschnittsdarstellung) der Verglasung 2 in einer Schnittebene parallel zur Stirnfläche 14 der Isolierverglasungseinheit 1 nach Figur 2A mit Blickrichtung entlang des Pfeils B auf Figur 2A.

Die Figuren 2A-C zeigen Detailansichten der Isolierverglasungseinheit 1 aus den Figuren 1A und 1B wie sie beispielsweise innerhalb einer Verglasung 2 angeordnet sein können. Für Details zur Isolierverglasungseinheit 1 wird daher auf die Beschreibung zu den Figuren 1A und 1B verwiesen. Es versteht sich, dass auch die Isolierverglasungseinheiten 1 nach den Figuren 1C oder 1D oder weitere erfindungsgemäße Ausgestaltungsbeispiele in der Verglasung 2 angeordnet sein können.

Des Weiteren umfasst ein beispielsweise U-förmiger Rahmen 3 die Kanten der Isolierverglasungseinheit 1 samt dem RFID-Transponder 9 und dem Kopplungselement 10. Der Rahmen 3 besteht in diesem Beispiel aus einem ersten metallischen Rahmenelement 3.1, das über ein polymeres und elektrisch isolierendes drittes Rahmenelement 3.3 mit einem zweiten metallischen Rahmenelement 3.2 verbunden ist. In diesem Beispiel sind die ersten und zweiten Rahmenelemente 3.1, 3.2 L-förmig ausgebildet. Der Rahmen 3 umgreift daher U-förmig die Stirnseite 14 der Isolierverglasungseinheit 1. Die parallel zu den großen Flächen der Glasscheiben 4a, 4b verlaufenden Abschnitte der ersten und zweiten Rahmenelemente sind derart ausgebildet, dass sie zumindest den Außenbereich 13 mit dem Versiegelungselement 6 und den Abstandshalterrahmen 5' in Durchsichtsrichtung (Pfeil A) durch die Isolierverglasungseinheit 1 vollständig bedecken.

Die Isolierverglasungseinheit 1 ist auf hier nicht dargestellten Trägern, insbesondere auf Kunststoffträger oder durch Kunststoffe elektrisch isolierte Trägerelementen, angeordnet. Des Weiteren ist zwischen den metallischen Rahmenelementen 3.1, 3.2 und den Glasscheiben 4a, 4b jeweils ein Elastomerprofil 7 angeordnet, so dass die Isolierverglasungseinheit 1 fest innerhalb des Rahmens 3 gehalten wird. Das Elastomerprofil 7 hat beispielsweise eine Dicke von 6,5 mm und fixiert den Abstand zwischen den jeweiligen Rahmenelementen 3.1, 3.2 und den Glasscheiben 4a, 4b.

Wie in Figur 2C dargestellt, besteht die Dipol-Antenne 9.1 aus einem ersten Antennenpol 9.1.1 und einen zweiten Antennenpol 9.1.2, die beide in der Mitte des RFID-Transponders 9 mit einer Elektronik verbunden sind. Das Kopplungselement 10 ist dabei derart angeordnet, dass es den ersten Antennenpol 9.1.1 vollständig bedeckt und auf der, dem zweiten Antennenpol 9.1.2 abgewandten Seite über den ersten Antennenpol 9.1.1 hinausragt. Durch diese Überdeckung und den geringen Abstand zwischen dem erstem Antennenpol 9.1.1 und dem Kopplungselement 10 findet eine kapazitive Kopplung statt.

Wie in den Figuren 2A und 2C im Detail dargestellt ist, ist das Kopplungselement 10 in einem Kopplungsbereich 15 mit dem metallischen zweiten Rahmen 3.2 gekoppelt. Dazu liegt die Kupferfolie des Kopplungselements 10 beispielsweise über ihre gesamte Länge am zweiten Rahmenelement 3.2 an und ist mit diesem galvanisch verbunden. Es versteht sich, dass zur Kopplung von Hochfrequenz-Signalen im Betriebsbereich des RFID-Transponders 9 auch eine kapazitive Kopplung genügt.

Wie Untersuchungen der Erfinder überraschenderweise ergaben, kann durch die Kopplung des Kopplungselements 10 an den Rahmen 3 der Verglasung 2 das Signal der Dipol-Antenne 9.1 des RFID-Transponders 9 nach außen geleitet und umgekehrt ein Signal von außen dem RFID-Transponder 9 zugeführt werden. Überraschenderweise ist die Reichweite des RFID-Signals im Vergleich zu Verglasungen 2 mit Isolierverglasungseinheiten 1 ohne Kopplungselement 10 deutlich erhöht.

So konnten mit einen RFID-Auslesegerät Signale in einem Abstand von bis zu 2,5 m ausgelesen und an den RFID-Transponder 9 gesendet werden - insbesondere auf der Seite der Isolierverglasungseinheit 1, auf der das zweite, gekoppelte, metallische Rahmelement 3.2 angeordnet ist.

Figur 3A zeigt eine Detailansicht (Querschnittsdarstellung) eines Kantenbereiches einer Verglasung 2 mit einer Isolierverglasungseinheit 1 gemäß einer weiteren Ausführungsform der Erfindung,

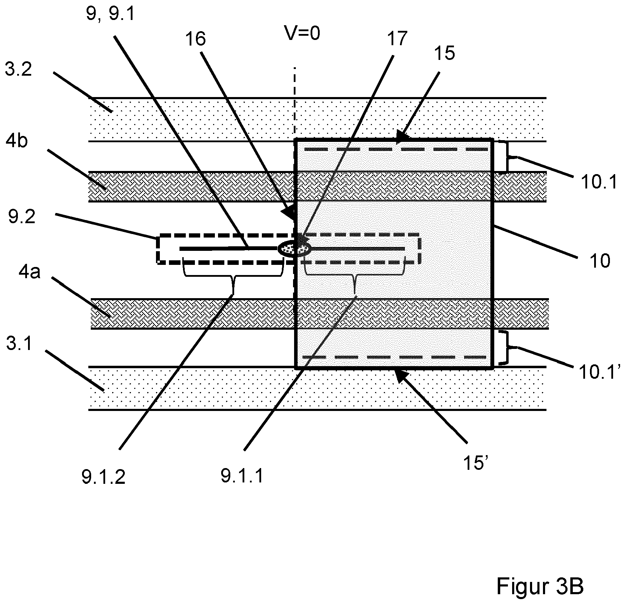

Figur 3B zeigt eine Detailansicht (Querschnittsdarstellung) der Verglasung in einer Schnittebene parallel zur Stirnfläche 14 der Isolierverglasungseinheit nach Figur 3A in Blickrichtung des Pfeils B aus Figur 3A.

Die Figuren 3A und 3B zeigen eine abgewandelte Konstruktion, die weitgehend die Elemente und den Aufbau der Verglasung 2 mit Isolierverglasungseinheit 1 nach den Figuren 2A-C hat. Insoweit sind die gleichen Bezugsziffern wie dort verwendet und der Aufbau wird hier nicht nochmals beschrieben.

Die Isolierverglasungseinheit 1 nach den Figuren 3A und 3B unterscheidet sich von den Figuren 2A und 2C durch die Ausgestaltung des Kopplungselements 10, das hier einen beidseitigen Überstand 10.1, 10.1' über die zweite Glasscheibe 4b und die erste Glasscheibe 4a hinaus aufweist. Dadurch ergeben sich zwei Kopplungsbereiche 15, 15', in denen das Kopplungselement 10 an die ersten und zweiten Rahmenelemente 3.1, 3.2 ankoppelt. Insgesamt führt dies zu einer Symmetrisierung der oben beschriebenen Eigenschaften zur Verbesserung Auslesereichweiten des RFID-Signals, so dass gleiche Signalstärken auf beiden Seiten der Isolierverglasungseinheit 1 erzielt werden können.

Tabelle 1 zeigt Messergebnisse an einer erfindungsgemäßen Verglasung 2 mit Isolierverglasungseinheit 1 gemäß den Figuren 3A und 3B und einer erfindungsgemäßen Isolierverglasungseinheit 1 gemäß den Figuren 1A und 1B im Vergleich mit einem Vergleichsbeispiel. Das Vergleichsbeispiel ist eine nicht erfindungsgemäße Verglasung mit einer Isolierverglasungseinheit mit einem RFID-Transponder 9 gemäß den Figuren 2A-C, aber ohne erfindungsgemäßes Kopplungselement 10.

**Tabelle 1**

| | typische maximale Lesereichweite mit RFID-Handheld-Lesegerät |
|---|---|
| Vergleichsbeispiel (Verglasung mit RFID-Transponder ohne Kopplungselement) | 0,3 m - 0,5 m |
| Verglasung mit Isolierverglasungseinheit nach Figur 3A und 3B | 1,5 m - 2 m |
| Isolierverglasungseinheit nach Figur 1A und 1B (ohne Rahmen) | 2 m - 2,5 m |

Für die Vergleichsmessungen wurde der RFID-Transponder 9 mit einem Handheld-RFID-Auslesegerät ausgelesen und das Auslesegerät mit zunehmendem Abstand zum RFID-Transponder 9 angeordnet. Der Abstand wurde mit einem Laser-Entfernungsmessgerät gemessen. Dabei war die maximale Lesereichweite unabhängig von der Seite, auf der relativ zur Isolierverglasungseinheit gemessen wurde.

Beim Vergleichsbeispiel eines RFID-Transponders 9, der im Außenbereich 13 einer Isolierverglasungseinheit nach dem Stand der Technik (ohne Kopplungselement) in einer Verglasung angeordnet war, ergab sich eine maximale Lesereichweite von 0,5 m. Die in der Tabelle 1 angegebene Spannweite von 0,3 m-0,5 m ergab sich durch verschiedene Winkel, unter denen das Auslesegerät relativ zur Isolierverglasungseinheit gehalten wurde. Eine derartig kurze Reichweite ist für die praktische Verwendung ungenügend, da bei unbekannter Position des RFID-Transponders in der Verglasung der komplette Rahmen abgesucht werden muss.

Bei einer erfindungsgemäßen Isolierverglasungseinheit 1 mit einem Kopplungselement 10, welches im Rahmen 3 einer erfindungsgemäßen Verglasung 2 angeordnet ist, ergaben sich hingegen überraschenderweise Reichweiten von bis zu 2 m. Dies ist für die praktische Verwendung vollkommen ausreichend und entspricht in etwa der Hälfte der Abstandswerte, die ein RFID-Transponder 9 gemäß Spezifikation aufweist. So ergab sich für eine freistehende Isolierverglasungseinheit 1 nach den Figuren 1A und 1B (also ohne den abschirmenden Rahmen 3 einer Verglasung) eine maximale Lesereichweite von ca. 4 m.

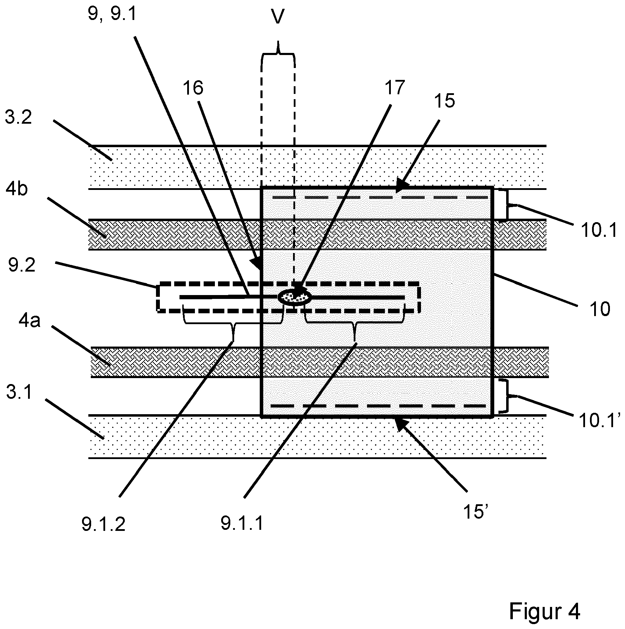

Figur 4 zeigt eine Detailansicht (Querschnittsdarstellung) einer Verglasung 2 in einer Schnittebene parallel zur Stirnfläche 14 einer Isolierverglasungseinheit 1 gemäß einer weiteren Ausführungsform der Erfindung.

Eine Kante 16 des Kopplungselement 10 ist hier nicht mittig zur Dipol-Antenne 9.1 (Mitte des Dipols 17) angeordnet, sondern um einen Versatz V von etwa 10 mm versetzt. Das Kopplungselement 10 überdeckt so auch einen Teil des zweiten Antennenpol 9.1.2. Dennoch konnten hier gute RFID-Signale gemessen werden. Insgesamt lassen sich bis zu einem Versatz v von 20% der halben Wellenlänge Lambda/2 der Betriebsfrequenz des RFID-Transponders 9 gute und praktisch verwertbare Signale beziehungsweise ausreichend Größe maximale Lesereichweiten erzielen. Dabei ist es unwesentlich, ob der Versatz V in Richtung des ersten Antennenpols 9.1.1 oder in Richtung des zweiten Antennenpols 9.1.2 erfolgt. Es hat sich bei Untersuchungen der Erfinder gezeigt, dass auch eine solche Anordnung die Empfangs-/Sendecharakteristik positiv beeinflusst und die erzielbare Auslesedistanz der RFID-Transponder 9 vergrößert.

Die Ausführung der Erfindung ist nicht auf die oben beschriebenen Beispiele und hervorgehobenen Ausführungsaspekte beschränkt, sondern auch in einer Vielzahl von Abwandlungen möglich, die sich für den Fachmann aus den anhängenden Ansprüchen ergeben.

### Bezugszeichenliste

- 1: Isolierverglasungseinheit
- 2: Verglasung
- 3: Rahmen
- 3.1,3.2: metallisches, erstes bzw. zweites Rahmenelement
- 3.3: polymeres, drittes Rahmenelement
- 4a, 4b: Glasscheiben
- 5: Abstandshalter
- 5': Abstandshalterrahmen
- 5.1,5.2: Scheibenkontaktfläche
- 5.3: Außenfläche des Abstandshalters 5
- 5.4: Innenfläche des Abstandshalters 5
- 6: Versiegelungselement
- 7: Elastomerprofil
- 9: RFID-Transponder
- 9.1: Dipol-Antenne
- 9.1.1, 9.1.2: erster bzw. zweiter Antennenpol
- 9.2: dielektrisches Trägerelement
- 10: Kopplungselement
- 10': Bereich des Kopplungselements 10
- 10.1, 10.1': Überstand
- 12: Innenbereich
- 13: Außenbereich
- 13.1: Außenseite des Außenbereichs 13
- 14: Stirnfläche der Isolierverglasungseinheit 1 oder der Glasscheiben 4a, 4b
- 15: Kopplungsbereich
- 16: Kante des Kopplungselements 10
- 17: Mitte der Dipol-Antenne 9.1
- 18: Außenfläche der Glasscheibe 4a oder 4b
- 19: Innenfläche der Glasscheibe 4a oder 4b
- Pfeil A: Draufsichtsrichtung bzw. Durchsichtsrichtung
- Pfeil B: Draufsichtsrichtung
- A: Abstand
- L: Länge
- Lambda: Wellenlänge
- U: Überstand
- V: Versatz

## Patentansprüche

1. Isolierverglasungseinheit (1), umfassend:
- mindestens einen Abstandshalter (5), der umlaufend zu einem Abstandshalterrahmen (5') geformt ist und einen Innenbereich (12) umgrenzt,
- eine erste Glasscheibe (4a), die auf einer Scheibenkontaktfläche (5.1) des Abstandshalterrahmens (5') und eine zweite Glasscheibe (4b), die auf einer zweiten Scheibenkontaktfläche (5.2) des Abstandshalterrahmens (5') angeordnet ist, und
- die Glasscheiben (4a, 4b) über den Abstandshalterrahmen (5') hinausragen und ein Außenbereich (13) gebildet ist, der zumindest abschnittsweise, bevorzugt vollständig, mit einem Versiegelungselement (6) gefüllt ist,
wobei
- mindestens ein RFID-Transponder (9) im Außenbereich (13) oder im äußeren Kantenbereich der Glasscheiben (4a, 4b) angeordnet ist,
- ein streifenförmiges Kopplungselement (10) mit dem RFID-Transponder (9) elektromagnetisch gekoppelt ist, **dadurch gekennzeichnet, dass**
- das Kopplungselement (10) die Stirnfläche (14) der Isolierverglasungseinheit (1) entlang der ersten Glasscheibe (4a) und/oder entlang der zweiten Glasscheibe (4b) abschnittsweise überragt.

2. Isolierverglasungseinheit (1) nach Anspruch 1, wobei das Kopplungselement (10) eine metallisierte Polymerfolie oder eine freitragende Metallfolie, bevorzugt aus Aluminium, einer Aluminiumlegierung, Kupfer, Silber oder Edelstahl enthält oder daraus besteht.

3. Isolierverglasungseinheit (1) nach Anspruch 2, wobei die Metallisierung der Polymerfolie eine Dicke von 10 µm bis 200 µm und die Metallfolie eine Dicke von 0,02 mm bis 0,5 mm und insbesondere von 0,09 mm bis 0,3 mm aufweist.

4. Isolierverglasungseinheit (1) nach einem der Ansprüche 1 bis 3, wobei das Kopplungselement (10) die Stirnfläche (14) der Isolierverglasungseinheit (1) entlang der ersten Glasscheibe (4a) und/oder entlang der zweiten Glasscheibe (4b) um einen Überstand U von 2 mm bis 30 mm, besonders bevorzugt von 5 mm bis 15 mm und insbesondere von 7 mm bis 10 mm abschnittsweise überragt.

5. Isolierverglasungseinheit (1) nach einem der Ansprüche 1 bis 4, wobei der RFID-Transponder (9) im Außenbereich (13) und bevorzugt unmittelbar an der Außenfläche (5.3) des Abstandshalters (5) oder an einer der Innenflächen (19) der Glasscheiben (4a,4b) oder inmitten des Außenbereichs (13), besonders bevorzugt ohne unmittelbarem Kontakt zu der Außenfläche (5.3) des Abstandshalters (5) und ohne unmittelbarem Kontakt zu den Innenflächen (19) der Glasscheiben (4a, 4b) angeordnet ist.

6. Isolierverglasungseinheit (1) nach einem der Ansprüche 1 bis 5, wobei der RFID-Transponder (9) an einer Außenfläche (18) einer der Glasscheiben (4a, 4b) mit einem Abstand von maximal 10 mm, bevorzugt maximal 50 mm und besonders bevorzugt von maximal 3 mm zur benachbarten Stirnfläche (14) der jeweiligen Glasscheibe (4a, 4b) angeordnet ist und/oder wobei der RFID-Transponder (9) an einer Stirnfläche (14) einer der Glasscheiben (4a, 4b) angeordnet ist.

7. Isolierverglasungseinheit (1) nach einem der Ansprüche 1 bis 6, wobei das streifenförmige Kopplungselement (10)
- innerhalb des Versiegelungselements (6) im Außenbereich (13),
- an einer Außenseite (13.1) des Außenbereichs (13),
- an mindestens einer Stirnseite (14) der Glasscheiben (4a, 4b) und/oder
- einer Außenseite (18) der Glasscheiben (4a, 4b)
angeordnet ist.

8. Isolierverglasungseinheit (1) nach einem der Ansprüche 1 bis 7, wobei der Abstand A zwischen einer Dipol-Antenne (9.1) des RFID-Transponders (9) und dem Kopplungselement (10) von 0 mm bis 10 mm, bevorzugt von 0 mm bis 4 mm, besonders bevorzugt von 1 mm bis 4 mm beträgt.

9. Isolierverglasungseinheit (1) nach einem der Ansprüche 1 bis 8, wobei das Kopplungselement (10) abschnittsweise deckungsgleich über dem RFID-Transponder (9) angeordnet ist.

10. Isolierverglasungseinheit (1) nach einem der Ansprüche 1 bis 9, wobei der RFID-Transponder (9) eine Dipol-Antenne (9.1) mit einem ersten Antennenpol (9.1.1) und einem zweiten Antennenpol (9.1.2) enthält oder daraus besteht und bevorzugt die Dipol-Antenne (9.1) auf einem dielektrischen Trägerelement (9.2), besonders bevorzugt einem polymeren Trägerelement (9.2) angeordnet ist.

11. Isolierverglasungseinheit (1) nach Anspruch 10, wobei das Kopplungselement (10) genau einen Antennenpol (9.1.1 oder 9.1.2) überdeckt und auf der dem anderen Antennenpol (9.1.2 oder 9.1.1) abgewandten Seite über den Antennenpol (9.1.1 oder 9.1.2) hinausragt.

12. Isolierverglasungseinheit (1) nach Anspruch 10 oder 11, wobei eine Kante (16) des Kopplungselements (10) in der Projektion einen Versatz V zur Mitte (17) der Dipol-Antenne (9.1) von -20% bis +20% der halben Wellenlänge Lambda/2 der Betriebsfrequenz des RFID-Transponders (9), bevorzugt von -10% mm bis +10% und insbesondere von -5% bis +5%, aufweist.

13. Isolierverglasungseinheit (1) nach Anspruch 10 oder 11, wobei eine Kante (16) des Kopplungselements (10) in der Projektion einen Versatz V zur Mitte (17) der Dipol-Antenne (9.1) bei einer Betriebsfrequenz des RFID-Transponders im UHF-Bereich von -30 mm bis +30 mm, bevorzugt von -20 mm bis +20 mm und insbesondere von -10 mm bis +10 mm aufweist.

14. Isolierverglasungseinheit (1) nach einem der Ansprüche 1 bis 13, wobei das Kopplungselement (10) eine Länge L parallel zur Erstreckungsrichtung der Dipol-Antenne (9.1) von größer oder gleich 40 % der halben Wellenlänge Lambda/2 der Betriebsfrequenz der Dipol-Antenne (9.1), bevorzugt von 40% bis 240%, besonders bevorzugt von 60% bis 120 % und insbesondere von 70% bis 95%, hat.

15. Isolierverglasungseinheit (1) nach einem der Ansprüche 1 bis 13, wobei das Kopplungselement (10) eine Länge L parallel zur Erstreckungsrichtung der Dipol-Antenne (9.1) von größer oder gleich 7 cm, bevorzugt von 7 cm bis 40 cm, besonders bevorzugt von 10 cm bis 20 cm und insbesondere 12 cm bis 16 cm hat.

16. Verglasung (2), insbesondere Fassadenverglasung, Fenster, Tür oder Innenraumtrennung, umfassend
- einen Rahmen (3) aus einem metallischen ersten Rahmenelement (3.1), einem metallischen zweiten Rahmenelement (3.3) und einem die Rahmenelemente (3.1,3.3) zumindest abschnittsweise und bevorzugt vollständig umlaufend, verbindenden polymeren dritten Rahmenelement (3.2) und
- einer im Rahmen (3) angeordneten Isolierverglasungseinheit (1) nach einem der Ansprüche 1 bis 15,
wobei das Kopplungselement (10) in mindestens einem Kopplungsbereich (15) mit einem der metallischen Rahmenelemente (3.1,3.3) und bevorzugt in zwei Kopplungsbereichen (15,15') mit jeweils einem der metallischen Rahmenelemente (3.1,3.3) galvanisch oder kapazitiv gekoppelt ist.

17. Verglasung (2) nach Anspruch 16, wobei der Rahmen (3) die Stirnflächen (14) der Isolierverglasungseinheit (1) umgreift und zugleich den oder die RFID-Transponder (9) in Durchsichtsrichtung (Pfeil A) durch die Glasscheiben (4a, 4b) überdeckt.

18. Verwendung des RFID-Transponders (9) in einer Verglasung (2) nach Anspruch 16 oder 17 als Identifikationselement.

## Claims

1. Insulating glazing unit (1), comprising:
- at least one spacer (5) which is shaped around the periphery to form a spacer frame (5') and delimits an inner region (12),
- a first glass pane (4a), which is arranged on a pane contact surface (5.1) of the spacer frame (5'), and a second glass pane (4b), which is arranged on a second pane contact surface (5.2) of the spacer frame (5'), and
- the glass panes (4a, 4b) project beyond the spacer frame (5'), and an outer region (13) is formed, which is filled, at least in sections, preferably completely, with a sealing element (6),
wherein
- at least one RFID transponder (9) is arranged in the outer region (13) or in the outer edge region of the glass panes (4a, 4b),
- a strip-shaped coupling element (10) is electromagnetically coupled to the RFID transponder (9), **characterized in that**
- the coupling element (10) projects in sections beyond the end face (14) of the insulating glazing unit (1) along the first glass pane (4a) and/or along the second glass pane (4b).

2. Insulating glazing unit (1) according to claim 1, wherein the coupling element (10) contains or is made of a metallized polymer film or a self-supporting metal foil, preferably made of aluminum, an aluminum alloy, copper, silver, or stainless steel.

3. Insulating glazing unit (1) according to claim 2, wherein the metallization of the polymer film has a thickness of 10 µm to 200 µm and the metal foil has a thickness of 0.02 mm to 0.5 mm and in particular of 0.09 mm to 0.3 mm.

4. Insulating glazing unit (1) according to one of claims 1 through 3, wherein the coupling element (10) projects in sections beyond the end face (14) of the insulating glazing unit (1) along the first glass pane (4a) and/or along the second glass pane (4b) by an overhang U of 2 mm to 30 mm, particularly preferably of 5 mm to 15 mm, and in particular of 7 mm to 10 mm.

5. Insulating glazing unit (1) according to one of claims 1 through 4, wherein the RFID transponder (9) is arranged in the outer region (13) and preferably directly on the outer surface (5.3) of the spacer (5) or on one of the inner surfaces (19) of the glass panes (4a,4b) or in the middle of the outer region (13), particularly preferably without direct contact with the outer surface (5.3) of the spacer (5) and without direct contact with the inner surfaces (19) of the glass panes (4a, 4b).

6. Insulating glazing unit (1) according to one of claims 1 through 5, wherein the RFID transponder (9) is arranged on an outer surface (18) of one of the glass panes (4a, 4b) at a distance of at most 10 mm, preferably at most 50 mm, and particularly preferably of at most 3 mm from the adjacent end face (14) of the respective glass pane (4a, 4b) and/or wherein the RFID transponder (9) is arranged on an end face (14) of one of the glass panes (4a, 4b).

7. Insulating glazing unit (1) according to one of claims 1 through 6, wherein the strip-shaped coupling element (10) is arranged
- within the sealing element (6) in the outer region (13),
- on an outer side (13.1) of the outer region (13),
- on at least one end face (14) of the glass panes (4a, 4b), and/or
- [on] an outer side (18) of the glass panes (4a, 4b).

8. Insulating glazing unit (1) according to one of claims 1 through 7, wherein the distance A between a dipole antenna (9.1) of the RFID transponder (9) and the coupling element (10) is from 0 mm to 10 mm, preferably from 0 mm to 4 mm, particularly preferably from 1 mm to 4 mm.

9. Insulating glazing unit (1) according to one of claims 1 through 8, wherein the coupling element (10) is arranged in sections congruently over the RFID transponder (9).

10. Insulating glazing unit (1) according to one of claims 1 through 9, wherein the RFID transponder (9) includes or consists of a dipole antenna (9.1) with a first antenna pole (9.1.1) and a second antenna pole (9.1.2) and preferably the dipole antenna (9.1) is arranged on a dielectric carrier element (9.2), particularly preferably a polymeric carrier element (9.2).

11. Insulating glazing unit (1) according to claim 10, wherein the coupling element (10) covers exactly one antenna pole (9.1.1 or 9.1.2) and projects beyond the antenna pole (9.1.1 or 9.1.2) on the side facing away from the other antenna pole (9.1.2 or 9.1.1).

12. Insulating glazing unit (1) according to claim 10 or 11, wherein one edge (16) of the coupling element (10) has, in the projection, an offset V from the center (17) of the dipole antenna (9.1) of -20% to +20% of the half wavelength lambda/2 of the operating frequency of the RFID transponder (9), preferably of -10% mm to +10%, and in particular of -5% to +5%..

13. Insulating glazing unit (1) according to claim 10 or 11, wherein one edge (16) of the coupling element (10) has, in the projection, an offset V from the center (17) of the dipole antenna (9.1) at an operating frequency of the RFID transponder in the UHF range of -30 mm to +30 mm, preferably of -20 mm to +20 mm, and in particular of -10 mm to +10 mm.

14. Insulating glazing unit (1) according to one of claims 1 through 13, wherein the coupling element (10) has a length L parallel to the direction of extension of the dipole antenna (9.1) greater than or equal to 40% of the half wavelength lambda/2 of the operating frequency of the dipole antenna (9.1), preferably of 40% to 240%, particularly preferably of 60% to 120%, and in particular of 70% to 95%.

15. Insulating glazing unit (1) according to one of claims 1 through 13, wherein the coupling element (10) has a length L parallel to the direction of extension of the dipole antenna (9.1) greater than or equal to 7 cm, preferably of 7 cm to 40 cm, particularly preferably of 10 cm to 20 cm, and in particular 12 cm to 16 cm.

16. Glazing (2), in particular façade glazing, window, door, or interior partition, comprising
- a frame (3) consisting of a metallic first frame element (3.1), a metallic second frame element (3.3), and a polymeric third frame element (3.2) connecting the frame elements (3.1,3.3) at least in sections and preferably completely circumferentially, and
- an insulating glazing unit (1) according to one of claims 1 through 15 arranged in the frame (3),
wherein the coupling element (10) is galvanically or capacitively coupled in at least one coupling region (15) with one of the metallic frame elements (3.1,3.3) and preferably in two coupling regions (15,15') with one of the metallic frame elements (3.1,3.3) in each case.

17. Glazing (2) according to claim 16, wherein the frame (3) engages around the end faces (14) of the insulating glazing unit (1) and, at the same time, covers the RFID transponder(s) (9) in the through-vision direction (arrow A) through the glass panes (4a, 4b).

18. Use of the RFID transponder (9) in a glazing (2) according to claim 16 or 17 as an identification element.

## Revendications

1. - Unité de vitrage isolant (1), comportant :
- au moins un espaceur (5), qui est formé sur tout le pourtour en un cadre d'espaceur (5') et délimite une région intérieure (12) ;
- une première vitre (4a), qui est disposée sur une surface de contact de vitre (5.1) du cadre d'espaceur (5'), et une seconde vitre (4b), qui est disposée sur une seconde surface de contact de vitre (5.2) du cadre d'espaceur (5'), et
- les vitres (4a, 4b) se projettent au-delà du cadre d'espaceur (5') et une région extérieure (13) est formée, qui est remplie, au moins par sections, de préférence entièrement, par un élément de scellement (6),
dans laquelle
- au moins un transpondeur RFID (9) est disposé dans la région extérieure (13) ou dans la région de bordure extérieure des vitres (4a, 4b) ;
- un élément de couplage (10) en forme de bande est couplé électromagnétiquement au transpondeur RFID (9),
**caractérisée par le fait que** :
- l'élément de couplage (10) se projette par sections au-delà de la face d'extrémité (14) de l'unité de vitrage isolant (1) le long de la première vitre (4a) et/ou le long de la seconde vitre (4b).

2. - Unité de vitrage isolant (1) selon la revendication 1, dans laquelle l'élément de couplage (10) contient ou se compose d'une feuille polymère métallisée ou d'une feuille métallique autoportante, de préférence en aluminium, en un alliage d'aluminium, en cuivre, en argent ou en acier inoxydable.

3. - Unité de vitrage isolant (1) selon la revendication 2, dans laquelle la métallisation de la feuille polymère présente une épaisseur de 10 µm à 200 µm, et la feuille métallique présente une épaisseur de 0,02 mm à 0,5 mm et, en particulier, de 0,09 mm à 0,3 mm.

4. - Unité de vitrage isolant (1) selon l'une des revendications 1 à 3, dans laquelle l'élément de couplage (10) se projette par sections au-delà de la face d'extrémité (14) de l'unité de vitrage isolant (1) le long de la première vitre (4a) et/ou le long de la seconde vitre (4b) d'une saillie U de 2 mm à 30 mm, de façon particulièrement préférée, de 5 mm à 15 mm, et, en particulier, de 7 mm à 10 mm.

5. - Unité de vitrage isolant (1) selon l'une des revendications 1 à 4, dans laquelle le transpondeur RFID (9) est disposé dans la région extérieure (13) et de préférence directement sur la surface extérieure (5.3) de l'espaceur (5) ou sur l'une des surfaces intérieures (19) des vitres (4a, 4b) ou au milieu de la région extérieure (13), de façon particulièrement préférée sans contact direct avec la surface extérieure (5.3) de l'espaceur (5) et sans contact direct avec les surfaces intérieures (19) des vitres (4a, 4b).

6. - Unité de vitrage isolant (1) selon l'une des revendications 1 à 5, dans laquelle le transpondeur RFID (9) est disposé sur une surface extérieure (18) de l'une des vitres (4a, 4b) à une distance de 10 mm au maximum, de préférence de 50 mm au maximum, et, de façon particulièrement préférée, de 3 mm au maximum, par rapport à la face d'extrémité adjacente (14) de la vitre respective (4a, 4b) et/ou dans laquelle le transpondeur RFID (9) est disposé sur une face d'extrémité (14) de l'une des vitres (4a, 4b).

7. - Unité de vitrage isolant (1) selon l'une des revendications 1 à 6, dans laquelle l'élément de couplage en forme de bande (10) est disposé
- à l'intérieur de l'élément de scellement (6) dans la région extérieure (13) ;
- sur un côté extérieur (13.1) de la région extérieure (13) ;
- sur au moins une face d'extrémité (14) des vitres (4a, 4b) et/ou ;
- sur un côté extérieur (18) des vitres (4a, 4b).

8. - Unité de vitrage isolant (1) selon l'une des revendications 1 à 7, dans laquelle la distance A entre une antenne dipôle (9.1) du transpondeur RFID (9) et l'élément de couplage (10) est de 0 mm à 10 mm, de préférence de 0 mm à 4 mm, de façon particulièrement préférée de 1 mm à 4 mm.

9. - Unité de vitrage isolant (1) selon l'une des revendications 1 à 8, dans laquelle l'élément de couplage (10) est disposé par sections en coïncidence sur le transpondeur RFID (9).

10. - Unité de vitrage isolant (1) selon l'une des revendications 1 à 9, dans laquelle le transpondeur RFID (9) contient ou se compose d'une antenne dipôle (9.1) avec un premier pôle d'antenne (9.1.1) et un second pôle d'antenne (9.1.2) et, de préférence, l'antenne dipôle (9.1) est disposée sur un élément support diélectrique (9.2), de façon particulièrement préférée un élément support polymère (9.2) .

11. - Unité de vitrage isolant (1) selon la revendication 10, dans laquelle l'élément de couplage (10) recouvre exactement un pôle d'antenne (9.1.1 ou 9.1.2) et se projette au-delà du pôle d'antenne (9.1.1 ou 9.1.2) sur le côté tourné à l'opposé de l'autre pôle d'antenne (9.1.2 ou 9.1.1).

12. - Unité de vitrage isolant (1) selon l'une des revendications 10 ou 11, dans laquelle un bord (16) de l'élément de couplage (10) présente, en projection, un décalage V par rapport au centre (17) de l'antenne dipôle (9.1) de -20% à +20% de la demi-longueur d'onde Lambda/2 de la fréquence de fonctionnement du transpondeur RFID (9), de préférence de -10% à +10% et en particulier de -5% à +5%.

13. - Unité de vitrage isolant (1) selon l'une des revendications 10 ou 11, dans laquelle un bord (16) de l'élément de couplage (10) présente en projection un décalage V par rapport au centre (17) de l'antenne dipôle (9.1) à une fréquence de fonctionnement du transpondeur RFID dans la plage des UHF de -30 mm à +30 mm, de préférence de -20 mm à +20 mm et en particulier de -10 mm à +10 mm.

14. - Unité de vitrage isolant (1) selon l'une des revendications 1 à 13, dans laquelle l'élément de couplage (10) a une longueur L parallèle à la direction d'extension de l'antenne dipôle (9.1) supérieure ou égale à 40% de la demi-longueur d'onde Lambda/2 de la fréquence de fonctionnement de l'antenne dipôle (9.1), de préférence de 40% à 240%, de façon particulièrement préférée de 60% à 120% et en particulier de 70% à 95%.

15. - Unité de vitrage isolant (1) selon l'une des revendications 1 à 13, dans laquelle l'élément de couplage (10) a une longueur L parallèle à la direction d'extension de l'antenne dipôle (9.1) supérieure ou égale à 7 cm, de préférence de 7 cm à 40 cm, de façon particulièrement préférée de 10 cm à 20 cm et en particulier de 12 cm à 16 cm.

16. - Vitrage (2), notamment vitrage de façade, fenêtre, porte ou séparation d'espace intérieur, comportant
- un cadre (3) constitué d'un premier élément de cadre métallique (3.1), d'un deuxième élément de cadre métallique (3.3) et d'un troisième élément de cadre polymère (3.2) reliant les éléments de cadre (3.1, 3.3) au moins par sections et de préférence sur tout le pourtour ; et
- une unité de vitrage isolant (1) disposée dans le cadre (3) selon l'une des revendications 1 à 15,
l'élément de couplage (10) étant couplé de manière galvanique ou capacitive dans au moins une région de couplage (15) avec l'un des éléments de cadre métalliques (3.1, 3.3) et de préférence dans deux régions de couplage (15, 15') avec respectivement l'un des éléments de cadre métalliques (3.1, 3.3).

17. - Vitrage (2) selon la revendication 16, dans lequel le cadre (3) entoure les faces d'extrémité (14) de l'unité de vitrage isolant (1) et, en même temps, recouvre le ou les transpondeurs RFID (9) dans le sens de la vision (flèche A) à travers les vitres (4a, 4b).

18. - Utilisation du transpondeur RFID (9) dans un vitrage (2) selon l'une des revendications 16 ou 17 en tant qu'élément d'identification.
